# EUROPEAN PATENT APPLICATION

(11) **EP 3 845 326 A1**
(43) Date of publication of application: **07.07.2021**
(21) Application number: 20839211.8
(22) Date of filing: 10.09.2020
(51) Int. Cl.: B21D 35/00, H04N 5/64

(54) **BACKPLATE MACHINING PROCESS, BACKPLATE, AND DISPLAY MODULE**

(30) Priority: 01.11.2019 CN 201911058473
(71) Applicant: Shenzhen Skyworth-RGB Electronic Co., Ltd., Shenzhen, Guangdong 518057 (CN)
(72) Inventor: The designation of the inventor has not yet been filed
(74) Representative: Osterhoff, Utz
(86) International application number: PCT/CN2020/114391
(87) International publication number: WO 2021/082754

(57) **Abstract**

Disclosed are a processing technology of a backplane, a backplane and a display module, where the processing technology of the backplane includes: placing a plate on a mold for embossing and stretching; blanking the plate to remove an embossed part to form a body and an upper part, a lower part, a left part and a right part respectively connected to a periphery of the body; and consecutively bending a part of the upper part, a part of the left part, and a part of the right part towards a same side of the body three times to form a plane structure parallel to the body, where the plane structure is configured to support a screen and cooperate with the body to define an installation cavity for placing an optical assembly.

## Description

### CROSS REFERENCE TO RELATED APPLICATIONS

This application claims the benefit of Chinese Patent application with No. 201911058473.6, filed on November 01, 2019 and entitled "Processing Technology of Backplane, Backplane and Display Module", the entirety of which is hereby incorporated herein by reference.

### TECHNICAL FIELD

This application relates to the field of display technology, in particular to a processing technology of a backplane, a backplane, and a display module using the backplane.

### BACKGROUND

In recent years, Liquid Crystal Display Televisions (LCD TVs) develops rapidly and constantly pursues for thin shape, which puts forward updated requirements for new display module design. As an important part of display module, the backplane plays an important role in the development trend of thinness.

Related backplanes generally adopt a structure with all-round folding edges. The backplane of this single-bending structure is prone to produce foreign matter during the production and assembly of the middle frame, thereby affecting production efficiency. However, the forming process of the multi-bending structure of the backplane is complicated, which makes the mold development difficult.

The above content is only used to help understand the technical solution of this application, and does not mean that the above content is recognized as prior art.

### SUMMARY

The main object of the present application is to provide a processing technology of a backplane, aiming to simplify the forming process of the backplane, reduce the difficulty of the backplane processing, and improve the production efficiency.

In order to achieve the above object, the processing technology of the backplane provided in this application includes:
placing a plate on a mold for embossing and stretching;
blanking the plate to remove an embossed part to form a body and an upper part, a lower part, a left part and a right part respectively connected to a periphery of the body; and
consecutively bending a part of the upper part, a part of the left part, and a part of the right part towards a same side of the body three times to form a plane structure parallel to the body, where the plane structure is configured to support a screen and cooperate with the body to define an installation cavity for placing an optical assembly.

In an embodiment, embossing the plate by a stamping process to form a bump on a periphery of the plate.

In an embodiment, stretching the plate while embossing the plate by the stamping process to form a side edge on the periphery of the plate, where the side edge is located on an inner side of the bump and is arranged in parallel with the bump.

In an embodiment, blanking the plate to remove an embossed part to form a body and an upper part, a lower part, a left part and a right part respectively connected to a periphery of the body includes:
blanking four corners of the plate to remove bumps at the four corners and form a bevel edge at two adjacent corners of the upper part; and
blanking the upper part, the lower part, the left part and the right part of the plate to remove bumps at the upper part, the lower part, the left part and the right part.

In an embodiment, defining a notch in a center of the bevel edge while forming the bevel edge at two adjacent corners of the upper part.

In an embodiment, the notch is V-shaped, and an angle of the notch is in a range of 90° to 93°;
and/or, a maximum depth of the notch is 1.0 mm.

In an embodiment, blanking the plate to remove an embossed part to form a body and an upper part, a lower part, a left part and a right part respectively connected to a periphery of the body further includes:
defining a V groove on each of the upper part, the left part and the right part, where the V groove is located on an outer side of the side edge and is arranged in parallel with the side edge.

In an embodiment, an angle of the V groove is in a range of 90° to 120°;
and/or, a depth of the V groove is in a range of 0.6mm to 0.75mm;
and/or, a width of the V groove is in a range of 1.2mm to 2.10mm.

In an embodiment, consecutively bending a part of the upper part, a part of the left part, and a part of the right part towards a same side of the body three times to form a plane structure parallel to the body includes:
in a first bending, bending a part of the upper part, a part of the left part and a part of the right part at 90° towards the same side of the body to form a folded edge;
in a second bending, continue bending the folded edge at the upper part, the left part, and the right part at 45° towards the same side of the body; and
in a third bending, continue bending the folded edge at the upper part, the left part, and the right part at 45° towards the same side of the body, where the folded edge after being bent form the plane structure parallel to the body.

In an embodiment, after the second bending, adding a support platform on a side of the body facing away from the folded edge, where the body, the part of the upper part, the part of the left part and the part of the right part are all limited by and abutted against the support platform.

This application further provides a backplane, which is manufactured by the above-mentioned processing technology of the backplane.

In an embodiment, the backplane includes the body, the side edge and the folded edge, where the body includes an upper part, the left part and the right part, the side edge is protruded from the upper part, the left part and the right part, the folded edge is connected to an end of the side edge away from the body and is arranged in parallel with the body, and the body, the side edge and the folded edge are cooperated to define the installation cavity for placing the optical assembly.

In an embodiment, the folded edge is divided into an outer part and an inner part by the side edge, and a thickness of the outer part is twice a thickness of the inner part.

This application further provides a display module, including:
the above-mentioned backplane;
a face frame, covering on the backplane and abutted against the side edge, where the face frame and the folded edge are cooperated to define a fixing cavity;
an optical assembly, arranged in the installation cavity; and
a display screen, arranged in the fixing cavity and abutted against the folded edge.

According to the processing technology of the backplane of the technical solution of the present application, the plate is embossed before being stretched, so that the plate forms a reinforcing structure, so that when the plate is stretched, the reinforcing structure formed on the plate limits the position of the plate, which effectively avoids the deformation of the plate during the stretching process and effectively simplifies the forming process steps of the backplane. At the same time, three consecutive bends are applied in the bending process to form the folded edge formed with 180-degree bending, which improves the stability of the folded edge and is not easy to rebound, thereby effectively reducing the processing difficulty of the backplane and improving the production efficiency.

### BRIEF DESCRIPTION OF THE DRAWINGS

In order to more clearly describe the technical solutions in the embodiments of this application or the related art, the following will briefly introduce the drawings that need to be used in the description of the embodiments or the related art. Obviously, the drawings in the following description are only some embodiments of this application. For those of ordinary skill in the art, without creative work, other drawings can be obtained according to the structures shown in these drawings.
Fig. 1 is a schematic structural diagram of a backplane according to an embodiment of this application.
Fig. 2 is a side view of Fig. 1.
Fig. 3 is a schematic structural diagram of a part of the backplane after embossing and stretching according to an embodiment of this application.
Fig. 4 is a side view of Fig. 3.
Fig. 5 is a schematic structural diagram of a part of the backplane after blanking corners according to an embodiment of this application.
Fig. 6 is a schematic structural diagram of a part of the backplane after blanking an upper part, a lower part, a left part and a right part according to an embodiment of this application.
Fig. 7 is a side view of Fig. 6.
Fig. 8 is a side view of the backplane after a first bending according to an embodiment of this application.
Fig. 9 is a side view of the backplane after a second bending according to an embodiment of this application.
Fig. 10 is a side view of the backplane after a third bending according to an embodiment of this application.

### Description of reference numerals:

| No. | Name | No. | Name |
|---|---|---|---|
| 100 | Backplane | 31 | Outer part |
| 1 | Body | 32 | Inner part |
| 11 | Upper part | 4 | Installation cavity |
| 12 | Lower part | 5 | Bump |
| 13 | Left part | 6 | Bevel edge |
| 14 | Right part | 7 | Notch |
| 2 | Side edge | 8 | V groove |
| 3 | Folded edge | 9 | Support platform |

The realization of the object, functional characteristics, and advantages of this application will be further described in conjunction with the embodiments and with reference to the accompanying drawings.

### DETAILED DESCRIPTION OF THE EMBODIMENTS

The technical solutions in the embodiments of this application will be described clearly and completely in conjunction with the drawings in the embodiments of this application. Obviously, the described embodiments are only a part of the embodiments of this application, but not all the embodiments. Based on the embodiments in this application, all other embodiments obtained by those of ordinary skill in the art without creative work shall fall within the protection scope of this application.

It should be noted that all directional indicators (such as up, down, left, right, front, back...) in the embodiments of this application are only used to explain the relative positional relationship, movement conditions, etc. among the components in a specific posture (as shown in the drawings), if the specific posture changes, the directional indicator also changes accordingly.

At the same time, the meaning of "and/or" in the full text means that it includes three parallel schemes. Taking "A and/or B" as an example, it includes scheme A, scheme B, and a scheme in which both A and B meet.

In addition, the descriptions related to "first", "second", etc. in this application are for descriptive purposes only, and cannot be understood as indicating or implying their relative importance or implicitly indicating the number of indicated technical features. Thus, the features defined as "first" and "second" may include at least one of the features either explicitly or implicitly. In addition, the technical solutions between the various embodiments can be combined with each other, but they must be based on the ability of those skilled in the art to realize. When the combination of technical solutions conflicts with each other or cannot be realized, it should be considered that the combination of such technical solutions does not exist, nor within the scope of protection required by this application.

This application provides a processing technology of a backplane 100 for processing the backplane 100. It can be understood that the backplane 100 can be applied to a display module, such as a liquid crystal television.

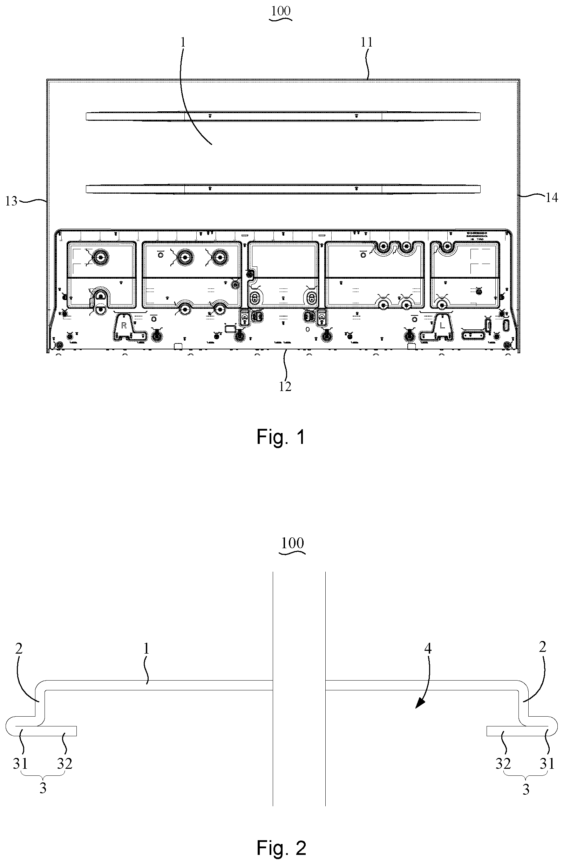

Please refer to Fig. 1, Fig. 2, Fig. 3, Fig. 4, Fig. 5, Fig. 6, Fig. 7, Fig. 8, Fig. 9 and Fig. 10, in an embodiment of the present application, the processing technology of the backplane 100 includes:
placing a plate on a mold for embossing and stretching;
blanking the plate to remove an embossed part to form a body 1 and an upper part 11, a lower part 12, a left part 13 and a right part 14 respectively connected to a periphery of the body 1; and
consecutively bending a part of the upper part 11, a part of the left part 13, and a part of the right part 14 towards a same side of the body 1 three times to form a plane structure parallel to the body 1, where the plane structure is configured to support a screen and cooperate with the body 1 to define an installation cavity 4 for placing an optical assembly.

It can be understood that the plate is a material used for processing and forming the backplane 100, and the material of the plate is a metal material, such as steel, iron, alloy, sheet metal, etc., which is specifically selected according to the actual application environment, and not limited here. Optionally, the plate is rectangular.

In this embodiment, the plate is processed by a mold to form the backplane 100 during the processing. All processing steps of the plate can be completed on one mold, or different processing steps can be completed on different molds. Optionally, in this embodiment, the plate is processed on different molds in different steps, such as embossing and stretching on one mold, blanking on another mold, and bending on still another mold, etc.

In this embodiment, the steps of placing the plate on the mold for embossing and stretching can be performed at the same time. This simplifies the processing technology so that the embossing and stretching process can be completed in one step. Certainly, different steps can also be done step by step on a same mold. It is understandable that the embossing process is a one-time forming, that is, after the plate is placed on the mold for embossing, a reinforcing structure is formed on the periphery of the plate.

According to the processing technology of the backplane 100 of the technical solution of the present application, the plate is embossed before being stretched, so that the plate forms a reinforcing structure, when the plate is stretched, the reinforcing structure formed on the plate limits the position of the plate, which effectively avoids the deformation of the plate during the stretching process and effectively simplifies the forming process steps of the backplane. At the same time, three consecutive bends are applied in the bending process to form the folded edge formed with 180-degree bending, which improves the stability of the folded edge and is not easy to rebound, thereby effectively reducing the processing difficulty of the backplane and improving the production efficiency.

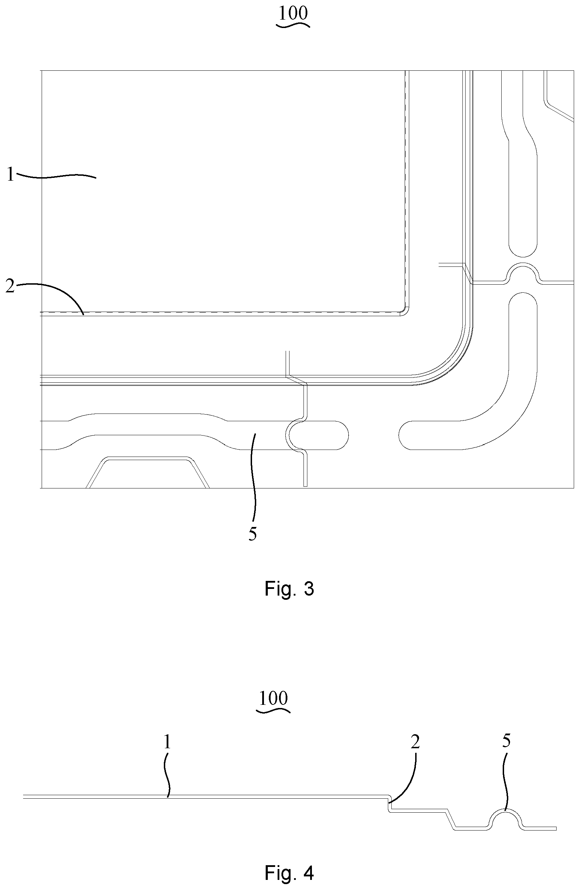

In an embodiment, as shown in Figs. 3 and 4, the embossing step in the processing technology of the backplane 100 is embossing the plate by a stamping process to form a bump 5 on a periphery of the plate. That is, the embossing step is performed on the periphery of the plate by the stamping process, so that the periphery of the plate forms the reinforcing structure such as the bump 5. It is understandable that in the embossing process, a plane pressing force of before the forming of the bump 5 is in a range of 20KG to 100KG, and a 1.0mm material thickness gap is in a range of 25% to 20%.

In an embodiment, as shown in Figs. 3 and 4, in the processing technology of the backplane 100, stretching the plate while embossing the plate by the stamping process to form a side edge 2 on the periphery of the plate, where the side edge 2 is located on an inner side of the bump 5 and is arranged in parallel with the bump 5.

It can be understood that while the plate is embossed to form the bump 5 by the stamping process, the stretching step is performed on the plate so that the periphery of the plate forms the side edge 2, that is, the plate is stretched to form a first step. Since the bump 5 is formed on the periphery of the plate after the embossing process, the strength of the plate is increased, so when the plate is stretched to form the first step to form the side edge 2, the plate is effectively prevented from being deformed during the stretching process.

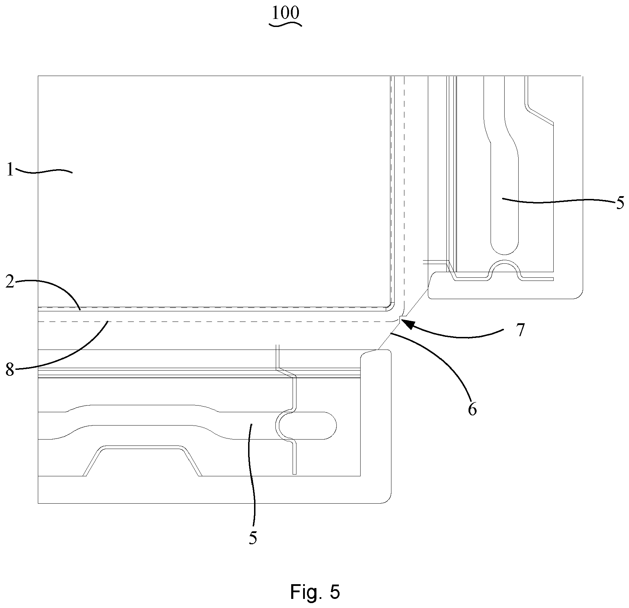

In an embodiment, as shown in Figs. 5, 6, and 7, blanking the plate to remove an embossed part to form a body 1 and an upper part 11, a lower part 12, a left part 13 and a right part 14 respectively connected to a periphery of the body 1 includes:
blanking four corners of the plate to remove bumps 5 at the four corners and form a bevel edge 6 at two adjacent corners of the upper part 11; and
blanking the upper part 11, the lower part 12, the left part 13 and the right part 14 of the plate to remove bumps 5 at the upper part 11, the lower part 12, the left part 13 and the right part 14.

It is understandable that after the plate is embossed and stretched, the upper part 11, the lower part 12, the left part 13 and the right part 14 of the plate are all formed with a side edge 2 (that is, the first step) and a bump 5. The bumps 5 surround the outside of the side edge 2.

By blanking the four corners of the plate, the bumps 5 at the four corners of the plate are cut and removed, and a bevel edge 6 is formed at the two adjacent corners of the upper part 11, as shown in Fig. 5. As such, it is convenient to perform the subsequent bending step, so that the structure of the formed backplane 100 is more compact without interference.

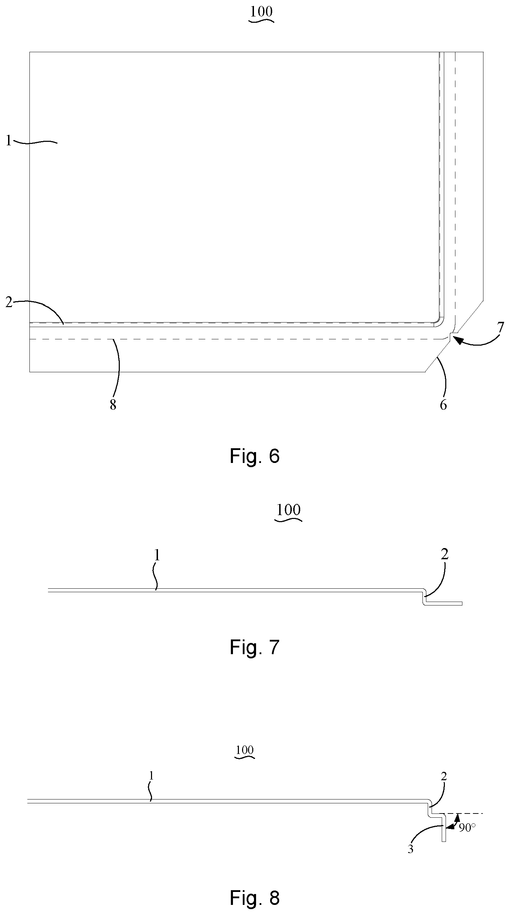

By blanking the upper part 11, the lower part 12, the left part 13 and the right part 14 of the plate, the bump 5 at the upper part 11, the lower part 12, the left part 13 and the right part 14 of the plate is cut and removed, as shown in Figs. 6 and 7, at this time, only the side edge 2 (that is, the first step) remains on the periphery of the plate (that is, the upper part 11, the lower part 12, the left part 13 and the right part 14).

In order to ensure the accuracy and stability of the subsequent bending of the plate, in an embodiment, as shown in Figs. 5 and 6, defining a notch 7 in a center of the bevel edge 6 while forming the bevel edge 6 at two adjacent corners of the upper part 11.

In this embodiment, while the corners of the plate are blanked to form the bevel edge 6, a notch 7 is defines in the center of the bevel edge 6. It is understandable that the design of the notch 7 can be confirmed through theoretical calculations and actual simulations, by forming a bevel edge 6 at the two adjacent corners of the upper part 11, and defining a notch 7 on the bevel edge 6, it can prevent subsequent extrusion during subsequent bending forming, and prevent from causing excessive material deformation in the corners, which can not reach the ideal state.

In an embodiment, as shown in Figs. 5 and 6, the notch 7 is V-shaped, and an angle of the notch 7 is in a range of 90° to 93°. It is understandable that the notch 7 is set in a V-shaped structure, and the angle of the notch 7 is set in the range of 90° to 93°, so that after bending, the upper part 11 and the left part 13 or the upper part 11 and the right part 14 of the bent backplane 100 can be closely connected to each other without mutual interference.

Optionally, a maximum depth of the notch 7 is 1.0 mm. That is, a distance from a top corner to an opening of the V-shaped notch 7 is 1.0 mm. This arrangement will not affect sizes between the upper part 11, the left part 13 and the right part 14 and the side edge 2 after being bent, thereby not affecting the installation of the optical assembly, and also ensuring the smooth bending of the upper part 11, the left part 13 and the right part 14. At the same time, during the production process, in order to ensure the strength of the backplane 100, two ends of the upper part 11 can be seamlessly connected with joints of the left part 13 and the right part 14 respectively by soldering.

In order to ensure the subsequent smooth bending of the plate, ensure accuracy and stability, and avoid wavy shapes after bending, in an embodiment, as shown in Fig. 6, blanking the plate to remove an embossed part to form a body 1 and an upper part 11, a lower part 12, a left part 13 and a right part 14 respectively connected to a periphery of the body 1 further includes:
defining a V groove 8 on each of the upper part 11, the left part 13 and the right part 14, where the V groove 8 is located on an outer side of the side edge 2 and is arranged in parallel with the side edge 2.

It is understandable that after blanking the upper part 11, the lower part 12, the left part 13 and the right part 14 of the plate, the V groove 8 is defined on the upper part 11, the left part 13 and the right part 14. The V groove 8 is defined on the outside of the side edge 2 to ensure the accuracy and stability of the bending of the upper part 11, the left part 13 and the right part 14 of the plate.

In this embodiment, an end of the V groove 8 is connected to a deepest part of the notch 7, that is, a line connecting the deepest parts of the two notches 7 on the bevel edge 6 at the two adjacent corners of the upper part 11 and the V groove 8 coincides. It can be understood that by forming the V groove 8, the subsequent bending of the upper part 11, the left part 13 and the right part 14 is pre-processed to ensure the accuracy and stability of the bending. The function of the V groove 8 is to ensure the stability of the subsequent bending process. If there is no V groove 8, there will be waves at the upper part 11, the left part 13 and the right part 14 of the backplane 100.

In an embodiment, an angle of the V groove 8 is in a range of 90° to 120°. It is understandable that the angle of the V groove 8 is set in the range of 90° to 120°, which can facilitate the bending steps of the upper part 11, the left part 13 and the right part 14, and at the same time can reduce the stress during the bending process. Optionally, a depth of the V groove 8 is in a range of 0.6 mm to 0.75 mm; a width of the V groove 8 is in a range of 1.2 mm to 2.10 mm. This arrangement can effectively destroy the stress generated during bending and forming, and achieve a stable effect. At the same time, in order to make the depth of the V groove 8 more stable, an upper mold forming the V groove 8 must have sufficient pressing force. The pressing forces of the upper part 11, the left part 13 and the right part 14 forming the V groove 8 are between 55 tons and 80 tons, the production mold punch used is more than 300 tons.

In an embodiment, as shown in Figs. 8, 9 and 10, consecutively bending a part of the upper part 11, a part of the left part 13, and a part of the right part 14 towards a same side of the body 1 three times to form a plane structure parallel to the body 1 includes:
in a first bending, bending a part of the upper part 11, a part of the left part 13 and a part of the right part 14 at 90° towards the same side of the body 1 to form a folded edge 3;
in a second bending, continue bending the folded edge 3 at the upper part 11, the left part 13, and the right part 14 at 45° towards the same side of the body 1; and
in a third bending, continue bending the folded edge 3 at the upper part 11, the left part 13, and the right part 14 at 45° towards the same side of the body 1, where the folded edge 3 after being bent form the plane structure parallel to the body 1.

It is understandable by defining the V groove 8 on the upper part 11, the left part 13 and the right part 14 through the previous steps, it can ensure that the upper part 11, the left part 13 and the right part 14 can be smoothly bent at 90° towards the same side of the body 1 to form a folded edge 3. That is, the folded edge 3 and the upper part 11, the left part 13 or the right part 14 are at 90°. In this embodiment, when the 90-degree bending process is completed, the corners are stretched with rounded corners to ensure a good transition of the visible area after the 180-degree bending.

In this embodiment, when the second bending is performed, it is only necessary to continue to bend the folded edge 3 by 45°, so that the folded edge 3 and the upper part 11, the left part 13 or the right part 14 are at 135°. As such, it can avoid the wavy shape of the folded edge 3 during the bending process, and ensure the stability and consistency of the backplane 100.

In this embodiment, by adding a 45-degree stop block on the inner side, it can ensure the stability of the angle after each stroke is pressed into place, and a sharp point of the stop block also plays a role of fixing and adjusting the size. At the same time, only 45° is bent in the second bending, which effectively solves the rebound and flatness problems caused by the conventional 180-degree lateral push.

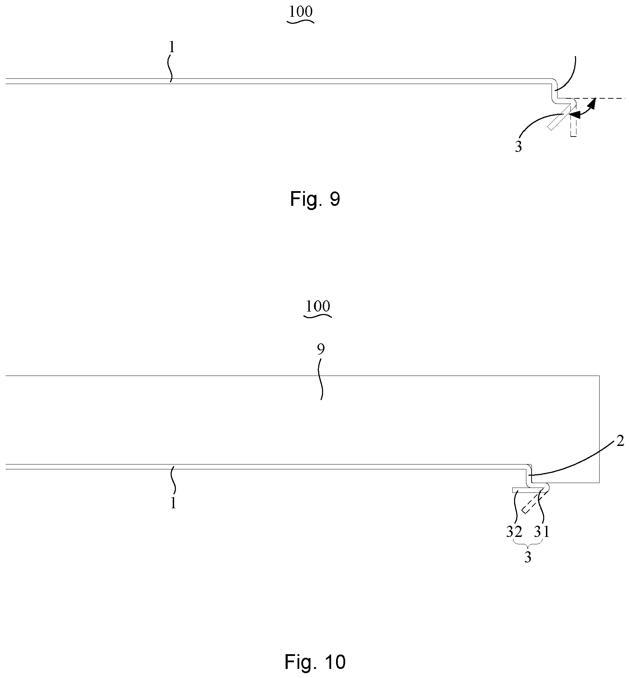

In an embodiment, as shown in Fig. 10, after the second bending, adding a support platform 9 on a side of the body 1 facing away from the folded edge 3, where the body 1, the part of the upper part 11, the part of the left part 13 and the part of the right part 14 are all limited by and abutted against the support platform 9.

It is understandable that by adding the support platform 9, the body 1, the parts of the upper part 11, the left part 13 and the right part 14 are all limited by and abutted against the support platform 9, so that when the third bending is performed, it can effectively ensure the stability of the backplane 100 after 180-degree bending, avoid the rebound of the folded edge after 180-degree bending and ensure the flatness.

In the processing technology of the backplane 100 of the present application, the reinforcing structure of the bump 5 is formed by embossing the plate first, and then the plate is stretched to form a peripheral folded edge, and its shape is roughly zigzag; a gap 7 is defined at two adjacent corners of the upper part 11, and the upper part 11, the left part 13 and the right part 14 are blanked to form the V groove 8; after that, the outer folded edge can be bent at 90 degrees accurately, at this time, the angles of the folding edges 3 at the upper part 11, the left part 13 and the right part 14 of the backplane 100 are all 90 degrees. After 135-degree bending (that is, continue bending the folded edge 3 for 45°) and 180-degree bending (that is, continue bending the folded edge 3 for 45° on the basis of 135-degree bending), the backplane 100 has a 180-degree bending structure with three folded edges 3 on the upper part 11, the left part 13 and the right part 14, thereby providing a high-strength lightweight backplane.

It is understandable that, in order to form the backplane 100 completely, the conventional processing steps of the backplane 100 are also performed during the above steps, such as shaping, hooking, punching, burring, sprouting, etc., so that other structures of the backplane 100 can be formed, which are not limited here.

As shown in Fig. 1 and Fig. 2, the present application further provides a backplane 100. The backplane 100 in this embodiment is manufactured by the processing technology of the backplane 100 described above.

In an embodiment, as shown in Figs. 1 and 2, the backplane 100 includes the body 1, the side edge 2 and the folded edge 3, where the body 1 includes the upper part 11, the left part 13 and the right part 14, the side edge 2 is protruded from the upper part 11, the left part 13 and the right part 14, the folded edge 3 is connected to an end of the side edge 2 away from the body 1 and is arranged in parallel with the body 1, and the body 1, the side edge 2 and the folded edge 3 are cooperated to define the installation cavity 4 for placing the optical assembly.

It can be understood that the side edge 2 protruding on the upper part 11, the left part 13 and the right part 14 of the body 1 are all formed by the stretching step in the processing technology of the backplane 100. The folded edge 3 is formed by three bendings in the processing technology of the backplane 100.

Specifically, as shown in Fig. 2, the folded edge 3 is divided into an outer part 31 and an inner part 32 by the side edge 2, and a thickness of the outer part 31 is twice a thickness of the inner part 32. That is, the first step side edge 2 is formed during the stretching process, and a part of the side edge 2 is bent three times to form the folded edge 3. It can be understood that the body 1, the side edge 2 and the folded edge 3 are cooperated to define an installation cavity 4 for placing the optical assembly.

It can be understood that the outer part 31 of the folded edge 3 is composed of two layers of plates, and the inner part 32 of the folded edge 3 is extended towards a center of the installation cavity 4.

The present application further provides a display module, including a backplane 100, a face frame, an optical assembly, and a display screen. The specific structure of the backplane 100 refers to the above-mentioned embodiments, because the display module adopts all the technical solutions of all the above-mentioned embodiments, it has at least all the beneficial effects brought about by the technical solutions of the above-mentioned embodiments, which will not be repeated here.

Specifically, the face frame is covered on the backplane 100 and abutted against the side edge 2, and the face frame and the folded edge 3 are cooperated to define a fixing cavity; the optical assembly is arranged in the installation cavity 4; and the display screen is arranged in the fixing cavity and abutted against the folded edge 3.

The above are only the optional embodiments of this application, and therefore do not limit the patent scope of this application. Under the conception of this application, any equivalent structural transformation made by using the content of the description and drawings of this application, or direct/indirect application in other related technical fields are all included in the patent protection scope of this application.

## Claims

1. A processing technology of a backplane, **characterized by** comprising:
placing a plate on a mold for embossing and stretching;
blanking the plate to remove an embossed part to form a body and an upper part, a lower part, a left part and a right part respectively connected to a periphery of the body; and
consecutively bending a part of the upper part, a part of the left part, and a part of the right part towards a same side of the body three times to form a plane structure parallel to the body, wherein the plane structure is configured to support a screen and cooperate with the body to define an installation cavity for placing an optical assembly.

2. The processing technology of the backplane of claim 1, **characterized by** comprising: embossing the plate by a stamping process to form a bump on a periphery of the plate.

3. The processing technology of the backplane of claim 2, **characterized by** comprising: stretching the plate while embossing the plate by the stamping process to form a side edge on the periphery of the plate, wherein the side edge is located on an inner side of the bump and is arranged in parallel with the bump.

4. The processing technology of the backplane of claim 3, **characterized in that** blanking the plate to remove an embossed part to form a body and an upper part, a lower part, a left part and a right part respectively connected to a periphery of the body comprises:
blanking four corners of the plate to remove bumps at the four corners and form a bevel edge at two adjacent corners of the upper part; and
blanking the upper part, the lower part, the left part and the right part of the plate to remove bumps at the upper part, the lower part, the left part and the right part.

5. The processing technology of the backplane of claim 4, **characterized by** comprising: defining a notch in a center of the bevel edge while forming the bevel edge at two adjacent corners of the upper part.

6. The processing technology of the backplane of claim 5, **characterized in that** the notch is V-shaped, and an angle of the notch is in a range of 90° to 93°;
and/or, a maximum depth of the notch is 1.0 mm.

7. The processing technology of the backplane of claim 4, **characterized in that** blanking the plate to remove an embossed part to form a body and an upper part, a lower part, a left part and a right part respectively connected to a periphery of the body further comprises:
defining a V groove on each of the upper part, the left part and the right part, wherein the V groove is located on an outer side of the side edge and is arranged in parallel with the side edge.

8. The processing technology of the backplane of claim 7, **characterized in that** an angle of the V groove is in a range of 90° to 120°;
and/or, a depth of the V groove is in a range of 0.6mm to 0.75mm;
and/or, a width of the V groove is in a range of 1.2mm to 2.10mm.

9. The processing technology of the backplane of any one of claims 1 to 8, **characterized in that** consecutively bending a part of the upper part, a part of the left part, and a part of the right part towards a same side of the body three times to form a plane structure parallel to the body comprises:
in a first bending, bending a part of the upper part, a part of the left part and a part of the right part at 90° towards the same side of the body to form a folded edge;
in a second bending, continue bending the folded edge at the upper part, the left part, and the right part at 45° towards the same side of the body; and
in a third bending, continue bending the folded edge at the upper part, the left part, and the right part at 45° towards the same side of the body, wherein the folded edge after being bent form the plane structure parallel to the body.

10. The processing technology of the backplane of claim 9, **characterized by** comprising: after the second bending, adding a support platform on a side of the body facing away from the folded edge, wherein the body, the part of the upper part, the part of the left part and the part of the right part are all limited by and abutted against the support platform.

11. A backplane, **characterized in that** the backplane is manufactured by the processing technology of the backplane as recited in any one of claims 1 to 10.

12. The backplane of claim 11, **characterized by** comprising the body, the side edge and the folded edge, wherein the body comprises the upper part, the left part and the right part, the side edge is protruded from the upper part, the left part and the right part, the folded edge is connected to an end of the side edge away from the body and is arranged in parallel with the body, and the body, the side edge and the folded edge are cooperated to define the installation cavity for placing the optical assembly.

13. The backplane of claim 12, **characterized in that** the folded edge is divided into an outer part and an inner part by the side edge, and a thickness of the outer part is twice a thickness of the inner part.

14. A display module, **characterized by** comprising:
the backplane as recited in claim 12 or 13;
a face frame, covering on the backplane and abutted against the side edge, wherein the face frame and the folded edge are cooperated to define a fixing cavity;
an optical assembly, arranged in the installation cavity; and
a display screen, arranged in the fixing cavity and abutted against the folded edge.
